# FASCICULE DE BREVET EUROPEEN

(11) **EP 1 613 049 B1**
(45) Date de publication et mention de la délivrance du brevet: **12.09.2007**
(21) Numéro de dépôt: 05291293.8
(22) Date de dépôt: 16.06.2005
(51) Int. Cl.: H04M 15/00, H04Q 7/24

(54) **Système et procédé de construction, diffusion et application d'au moins une offre d'utilisation du réseau à au moins un terminal mobile**
System und Verfahren für Aufbau, Zerstäubung und Implementierung mindestens eines Angebots des Gebrauches von dem Netz zu mindestens einem Mobilendgerät
System and process of construction, diffusion and implementation of at least an offer of use of the network to at least a mobile terminal

(30) Priorité: 02.07.2004 FR 0407329
(43) Date de publication de la demande: 04.01.2006
(73) Titulaire: Societé Française du Radiotéléphone, 75008 Paris (FR)
(72) Inventeur: Faisy, Christian, 97400 Saint Denis de la Reunion (FR)
(74) Mandataire: Debay, Yves

(56) Documents cités:
- EP-A- 0 808 073
- US-A1- 2004 121 758

## Description

La présente invention concerne un système et un procédé de construction, diffusion et application d'au moins une offre d'utilisation du réseau à au moins un terminal relié à un réseau de communication, de préférence un réseau de téléphonie mobile.

Les réseaux de téléphonie nécessitent des investissements importants et sont conçus en fonction de prévisions du trafic. Pour se rapprocher autant que possible de ce trafic prévisionnel, les opérateurs ont établi des offres tarifaires qui tiennent compte des plages horaires à faible trafic. Ces solutions reposent sur l'utilisation d'une table de tarifs prédéterminés qui ne permettent pas de gérer finement des paramètres comme le remplissage du réseau en proposant des tarifs variables en fonction de sa disponibilité. Ces solutions ne permettent pas non plus de gérer des offres tarifaires adaptables en fonction de l'analyse de critères déterminants liés aux utilisateurs qui sont déjà sur le réseau.

Un exemple est le document : US 2004/0121758 (HOCHE MICHAEL WALTER ET AL) 24 JUIN 2004.

La présente invention a pour but de supprimer certains inconvénients de l'art antérieur en proposant un système de construction, diffusion et application d'une offre d'utilisation du réseau limitée et évolutive dans le temps qui utilise les paramètres de remplissage d'un réseau, de préférence de téléphonie mobile et le profil d'attachement au réseau des clients à cibler. Le système selon l'invention permet de substituer à une table de tarifs prédéfinis un système de gestion de tarifs promotionnels évolutifs dans le temps et proposés à des clients préalablement ciblés.

Ce but est atteint par un système de construction, diffusion et application d'au moins une offre d'utilisation promotionnelle du réseau, notamment pour les réseaux de téléphonie mobile, comportant au moins une station de transmission à laquelle est connecté au moins un terminal mobile, un service vocal interactif, plusieurs bases de données contenant des informations relatives à la clientèle ou à l'état du réseau, caractérisé en ce qu'un sous-système applicatif actionné par le biais de l'interface de saisie d'un système applicatif interroge les stations de transmission constitutives d'un réseau de téléphonie mobile afin de connaître le taux d'occupation du réseau ainsi que le numéro IMSI de la carte SIM des terminaux mobiles connectés au réseau, ces résultats sont stockés dans une base de données support et comparés aux informations contenues dans les bases de données respectivement support, marketing et offre par le système applicatif qui détermine en fonction de critères les utilisateurs sélectionnés et invite par message les utilisateurs des terminaux mobiles sélectionnés à contacter le service vocal interactif afin de pouvoir bénéficier d'une offre tarifaire promotionnelle personnalisée.

Selon une autre particularité, le sous-système applicatif interroge les stations de transmission via les canaux d'interrogation distante des couches physiques du réseau ou via des sondes.

Selon une autre particularité, l'interrogation des stations de transmission permet de déterminer leur taux de charge immédiat ainsi que leur taux d'hébergement.

Selon une autre particularité, les paramètres relatifs aux stations de transmission et contenus dans le système applicatif sont représentatifs de la charge des stations, l'exclusion de certaines d'entre elles de l'offre promotionnelle, le taux de *« handover »* et le taux de « *roaming* ».

Selon une autre particularité, l'invitation qui est faite à l'utilisateur de contacter le service vocal interactif s'effectue par SMS ou par push WAP.

Selon une autre particularité, la base de données support contient les informations issues de l'interrogation du réseau effectuée par le sous-système applicatif ainsi que le numéro IMSI de la carte SIM des terminaux connectés au réseau au moment de l'interrogation.

Selon une autre particularité, une base de données offre contient des informations relatives aux différents types d'offres tarifaires promotionnelles existantes.

Selon une autre particularité, une base de données marketing contient des informations relatives à chaque client de l'opérateur de téléphonie mobile comme par exemple le type de contrat qui lie les deux parties.

Un autre but est de proposer de sécuriser l'accès à ces offres.

Selon une autre particularité, le sous-système applicatif compare le numéro IMSI de la carte SIM des terminaux connectés au réseau lors de l'interrogation avec ceux contenus dans la base de données marketing, seuls les numéros IMSI relevés au cours de l'interrogation et qui correspondent à ceux de clients de l'opérateur étant mis en mémoire dans la base de données support.

Selon une autre particularité, le serveur vocal interactif dispose de moyens lui permettant d'identifier le numéro d'appel de l'utilisateur afin de procéder à une comparaison entre ce numéro et ceux stockés dans la base de données promotionnelle.

Selon une autre particularité, le serveur vocal interactif est accessible via un numéro court et dispose de moyens de reconnaissance du numéro d'appel de l'utilisateur, restreignant ainsi en amont l'accès aux seuls clients de l'opérateur à l'origine de la proposition de promotion tarifaire.

Selon une autre particularité, le numéro court d'accès au serveur vocal interactif n'est pas tarifé (appel gratuit) permettant ainsi aux clients en prépaiement de pouvoir bénéficier de l'offre, le calcul de la durée d'appel possible en fonction de leur crédit d'une part et de la taxation remisée du fait de la promotion sur le numéro appelé d'autre part, permettant de garantir le non dépassement du montant prépayé décompté du système de gestion des comptes par le système de valorisation.

Selon une autre particularité, le serveur vocal interactif diffuse un message de dissuasion dans le cas où le numéro d'appel de l'utilisateur est inconnu de la base de données promotionnelle.

Selon une autre particularité, la base de données promotionnelle est connectée à un système de pré-valorisation dont la fonction est l'émission de tickets promotionnels destinés à la facturation de la communication.

Selon une autre particularité, le système de pré-valorisation utilise, lors de l'émission sous forme numérique du ticket promotionnel, des informations issues de la base de données promotionnelle telles que des renseignements sur la promotion dont bénéficie l'utilisateur, la cellule d'origine de l'appel, l'heure de l'appel, la durée de l'appel, le numéro appelé.

Selon une autre particularité, une fois le ticket émis, le système de pré-valorisation le transmet au système de valorisation qui l'inclut pour la facturation de l'utilisateur.

Selon une autre particularité, chaque utilisateur du réseau de téléphonie mobile reçoit une offre personnalisée qui tient compte du nombre d'heures de son forfait, des prestations de service auxquelles il a souscrit et de ses habitudes de consommation.

Un autre but est de proposer un procédé de construction, diffusion et application d'une offre d'utilisation du réseau évolutif limité dans le temps de construction, diffusion et application d'au moins une offre d'utilisation du réseau, notamment de téléphonie mobile, caractérisé en ce qu'il comprend les étapes suivantes :
- une étape de lancement via l'interface de saisie du système applicatif d'une interrogation du réseau par le sous-système applicatif afin de déterminer l'encombrement du réseau,
- une étape d'interrogation du réseau par le sous-système,
- une étape de comparaison par le sous-système, des renseignements obtenus au cours de l'interrogation avec des données contenues dans le système applicatif et la base de données marketing,
- une étape de mémorisation par le sous-système applicatif du numéro IMSI de la carte SIM des terminaux affiliés à l'opérateur et connectés aux stations de transmission sélectionnées,
- une étape de transmission par le système applicatif des informations contenues dans la base de données support et la base de données offre vers la base de données promotionnelle qui est en relation avec le serveur vocal interactif,
- une étape d'information de l'utilisateur d'un terminal mobile dont le numéro IMSI de la carte SIM est stocké dans la base de données support via SMS ou push WAP,
- une étape au cours de laquelle l'utilisateur appelle un numéro court qui le met en relation avec le serveur vocal interactif,
- une étape d'émission par le système de pré-valorisation d'un ticket promotionnel nécessaire à la facturation de la communication effectuée dans le cadre de la promotion tarifaire,
- une étape de transmission du ticket promotionnel vers le système de valorisation qui gère la facturation de l'utilisateur.

Selon une autre particularité, le serveur vocal interactif émet un message dissuasif lorsqu'il est contacté par un utilisateur dont le numéro IMSI n'est pas stocké dans la base de données promotionnelle.

D'autres particularités et avantages de la présente invention apparaîtront plus clairement à la lecture de la description ci-après, faite en référence aux dessins annexés, dans lesquels :

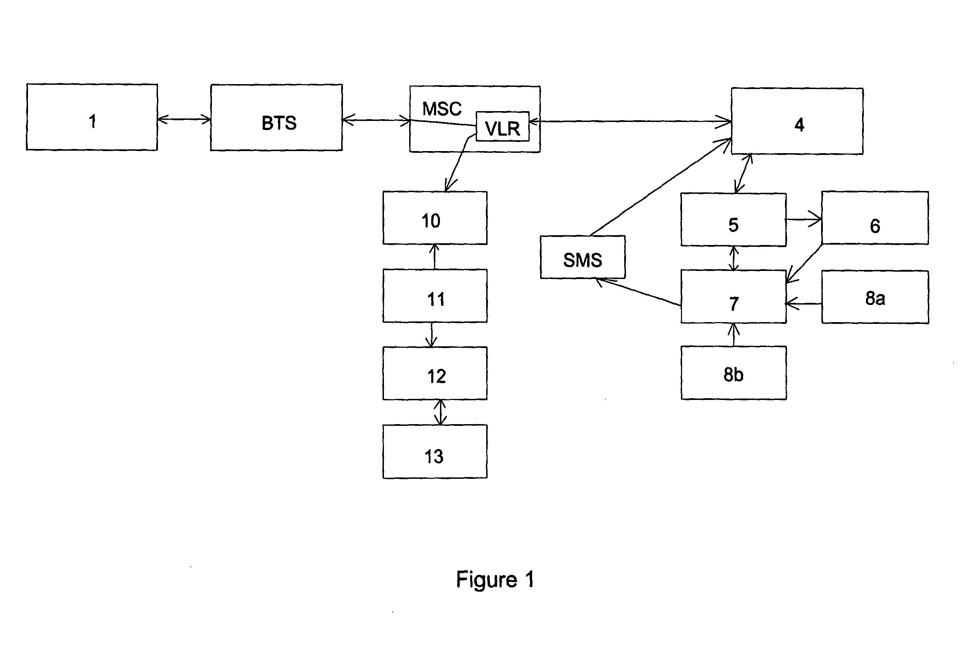

- la figure 1 représente un organigramme regroupant les différents éléments constitutifs du système selon l'invention ainsi que leur interaction,

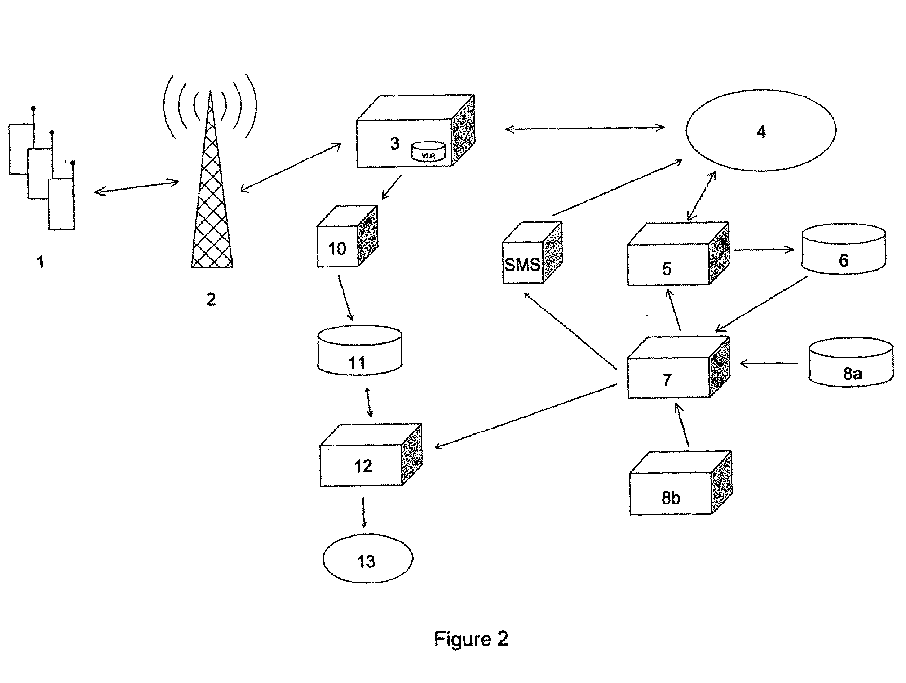

- la figure 2 représente un schéma mettant en avant les interactions des divers composants du système selon l'invention.

L'invention concerne les réseaux de communication et plus particulièrement les réseaux de téléphonie mobile.

Un système de radiotéléphonie utilise une liaison radioélectrique pour permettre la communication entre un terminal (1) et un réseau de communication (4).

Un réseau de téléphonie mobile, par exemple de type GSM, est composé de deux sous-systèmes un sous-système radio et un sous-système réseau.

Le sous-système radio comporte un tissu de stations de base (BCS) (2) qui gèrent notamment les allocations des canaux d'appels et commandent une ou plusieurs stations de transmission (BTS) (2). Les stations de transmission consistent en un équipement composé d'émetteurs-récepteurs radio et constituent une interface entre les stations de base (BSC) et les terminaux mobiles (1).

Le sous-système réseau se compose essentiellement de commutateurs fixes (MSC) (3) qui permettent la gestion des appels entrants et sortants, ainsi que de bases de données du type VLR (*Visitor Location Register*). Les VLR contiennent des informations relatives à la localisation géographique de l'utilisateur ainsi que des données comme son identifiant IMSI et qui sont intégrées dans le MSC. Les stations de transmission (2) transmettent par ondes radioélectriques des données concernant les terminaux mobiles (1) qui leur sont connectés à la station de base (BSC) dont elles dépendent. La station de base (BSC) contient, dans des moyens de mémorisation, la position des différents stations de transmission dont elle assure la gestion, elle stocke, dans d'autres moyens de mémorisation, les informations reçues des différentes stations de transmission (2) et qui concernent les identifiants des terminaux mobiles(1). Les stations de base transmettent ensuite par une communication radio ou filaire les informations contenues dans leurs divers moyens de mémorisation vers les commutateurs fixes MSC qui les stockent alors dans des moyens de mémorisation des VLR. Les informations contenues dans les VLR sont récupérées par l'opérateur lorsqu'il interroge le réseau via les canaux d'interrogation des couches physiques du réseau. Les informations reçues sont ensuite classées dans différentes bases de données par le système d'administration du réseau afin de pouvoir en faciliter la gestion.

L'usager d'un réseau de téléphonie mobile se déplace en différents points du territoire couvert par le réseau. Au cours de son déplacement, cet usager doit pouvoir appeler ou être appelé, c'est la notion d'itinérance ou *« roaming* ». En cours de communication, le terminal mobile (1) est en liaison radio avec une station de base (BCS) déterminée. Chaque station de base (BCS) gère plusieurs stations de transmission (2) ainsi que la source radio. Afin d'assurer la continuité du service lorsque l'usager se déplace, il est parfois nécessaire de changer la station de base avec laquelle le terminal est relié tout en maintenant la communication, c'est le transfert intercellulaire ou *« handover ».* Ce sont les stations de base (BCS) qui décident du *« handover »* et informent le VLR du changement de localisation géographique du terminal mobile afin que sa position soit toujours connue du réseau (4). Un réseau de téléphonie du type GSM propose un tel système de suivi des communications.

Le système selon l'invention repose sur le principe de l'analyse de l'encombrement du réseau de communication ainsi que sur les habitudes de communication de ses clients. La corrélation de ces données permet à l'opérateur de téléphonie mobile de savoir quels sont les moments et les lieux propices à la mise en place d'une offre promotionnelle d'utilisation du réseau.

Dans un premier temps, un ou plusieurs commerciaux travaillant pour un opérateur de téléphonie mobile lancent une interrogation au travers du MSC des stations de transmission (2) constitutives du réseau (4) afin de déterminer leur taux de charge immédiat (nombre de fréquences allouées par rapport au nombre de fréquences totales) ainsi que leur taux d'hébergement (nombre de terminaux mobiles (1) sous l'influence d'une station de transmission (2) donnée). Cette interrogation est réalisée par le biais d'une interface d'affichage et de saisie d'un système applicatif (7). Le système applicatif (7) est en liaison avec un sous-système applicatif (5), une base de donnée dite "offre" (8a) contenant différents types d'offres et un système contenant des informations marketing du type contrat du client, localisation de son terminal, etc... Le sous-système applicatif (5) interroge par des messages les différentes stations de transmission du réseau et compare les informations contenues dans les messages de réponse qu'il a obtenu avec des paramètres préalablement définis qu'il contient dans des moyens de mémorisation. Les terminaux mobiles (1) communiquant par les stations de transmission retenues par le sous-système applicatif comme remplissant les conditions de fréquentation suffisantes pour donner lieu à la mise en place d'une offre promotionnelle, sont mis en mémoire dans une base de données dite base de données support (6) contenant leur numéro IMSI et les informations correspondant à l'offre promotionnelle appliquée.

Le système applicatif (7) contient dans des moyens de mémorisation des renseignements quant à différents paramètres du réseau. Ces paramètres portent sur les stations de transmission du réseau et sur les terminaux mobiles qui utilisent ces stations. Les paramètres concernant les stations de transmission renferment les informations suivantes : la charge des stations, le fait que certaines stations soient exclues de l'offre promotionnelle (phénomène du "black listage"), les taux de *« handover »* et de « *roaming* ». Les paramètres portant sur les terminaux mobiles permettent de déterminer par comparaison avec les données d'identité stockées dans la base de données marketing si un terminal connecté à une station de transmission donnée est un terminal affilié à l'opérateur dont il utilise le réseau (auquel cas il pourra bénéficier d'une promotion tarifaire si celle-ci existe), si tel n'est pas le cas ce terminal doit être exclu de l'offre tarifaire promotionnelle dont pourraient bénéficier les terminaux connectés à cette station de transmission et pour cela tout renseignement relatif à ce terminal mobile est effacé des bases de données du réseau.

Le système applicatif (7) transmet ces informations au sous-système applicatif (5) qui les met en mémoire et en tiendra compte au cours de son interrogation des diverses stations de transmission qui composent le réseau de téléphonie mobile. Le sous-système applicatif va donc agir comme un centre d'administration (OMC) en supervisant l'ensemble des stations de transmission du réseau lorsqu'il les interroge au travers des MSC via les canaux d'interrogation distante des couches physiques du réseau ou via des sondes.

Ainsi, au terme de l'interrogation du réseau par le sous-système applicatif (5), seules les informations des clients, dont l'identité est stockée dans le système d'information marketing (8b) et dont la connexion à une station de transmission a été établie, seront stockées dans la base de données support (6) en tant que client de l'opérateur.

Une fois les stations de transmission (2) sélectionnées par le sous-système, il faut informer les usagers dont le terminal (1) communique par de telles stations et dont le numéro IMSI a été stocké dans la base de données support (6) qu'ils vont pouvoir bénéficier d'une offre d'utilisation du réseau promotionnelle et sous quelles conditions ils vont pouvoir en profiter.

Le système applicatif (7) collecte via la base de données support les numéros IMSI des terminaux profitant de l'offre promotionnelle et lance une procédure d'envoi d'un message par SMS ou push WAP vers tous ces terminaux.

Le WAP (*Wireless Application Protocol*) est un protocole de communication destiné à permettre la communication entre un terminal sans fils possédant une adresse URL permettant de l'identifier et de le contacter le cas échéant et un prestataire de service lui aussi possédant une adresse URL permettant de la joindre. Par abus de langage, le WAP désigne également un service interactif d'échanges de données entre un utilisateur détenteur d'un terminal mobile et un prestataire de services multimédias tel qu'un opérateur de téléphonie mobile. Les données échangées par le biais du WAP dépendent du service contacté par l'utilisateur et peuvent être par exemple les prévisions météorologiques, les horaires des cinémas, ou encore le trafic routier.

La technologie du push WAP consiste pour l'opérateur de téléphonie mobile à forcer un terminal mobile (1) à se connecter à son serveur par le biais du WAP, c'est-à-dire que ce n'est pas l'utilisateur du terminal mobile qui décide de se connecter au serveur de l'opérateur par le biais du WAP, mais son opérateur qui le connecte d'office pour les besoins du service. Lorsqu'il souhaite établir une connexion forcée, l'opérateur doit prendre en compte plusieurs paramètres. Dans un premier temps, il convient de vérifier que l'utilisateur est abonné aux services multimédias et qu'il possède, d'après le numéro IMEI envoyé par le téléphone, un terminal apte à recevoir un message par le biais du WAP ; une simple vérification du compte client dans la base de données marketing (8b) renseigne le système applicatif (7) sur cet état de fait. Dans un second temps, l'opérateur vérifie que l'utilisateur est connecté à une station du réseau par le biais d'une procédure de rappel automatique. Si l'utilisateur est connecté au réseau, le système applicatif (7) ayant pris connaissance de l'adresse URL du terminal (1) du client déclenche la procédure d'envoi du message en utilisant le WAP. Dans le cas contraire, le rappel automatique vérifie l'état de la connexion de l'utilisateur jusqu'à ce que celui-ci se connecte au réseau.

Le système applicatif (7) envoie également vers une base de données dite "promotionnelle" (11) les informations relatives à la promotion en cours ainsi que divers renseignement sur les terminaux qui pourront en bénéficier comme par exemple leur numéro d'appel ou leur numéro IMSI.

Le message d'information envoyé via SMS ou push WAP indique au possesseur du terminal qu'il bénéficie d'une offre promotionnelle ainsi que la marche à suivre pour utiliser cette offre. L'offre peut être à titre d'exemple, une réduction de 50 % pour tout appel passé qui débute après une certaine heure. Le possesseur du terminal mobile (1) appelle un numéro court gratuit indiqué dans le SMS ou le message adressé par push WAP, la gratuité de cet appel permet aux utilisateurs qui bénéficient du système de pré-paiement de pouvoir bénéficier de l'offre. Cet appel aboutit sur un serveur vocal interactif appelé "Front d'accueil des promotions" (10). Ce système dispose de moyens de reconnaissance du numéro d'appel de l'appelant (le possesseur du terminal bénéficiant de la promotion tarifaire). Une fois le numéro d'appel identifié, le serveur vocal interactif (10) procède à une comparaison, par le biais d'une routine de comparaison, de ce numéro avec ceux contenus dans la base de données promotionnelle. Si le numéro appelant n'est pas stocké dans la base de données promotionnelle (11), le serveur vocal interactif (10) diffuse alors un message de dissuasion indiquant à l'utilisateur qu'il ne peut bénéficier de l'offre tarifaire promotionnelle bien qu'il ait été informé de l'existence de celle-ci.

Si la base de données promotionnelle (11) contient le numéro d'appel du terminal de l'utilisateur, c'est que celui-ci possède bien un compte dans la base de données de l'opérateur. L'utilisateur est alors invité à composer le numéro de son correspondant.

Un système de pré-valorisation (12) va émettre les données d'un ticket promotionnel qui permettra de « facturer » l'utilisateur. Pour émettre ce ticket promotionnel, le système de pré-valorisation (12) utilise des informations issues du compte utilisateur contenu dans la base de données promotionnelle (11), comme par exemple des renseignements sur la promotion dont bénéficie l'utilisateur, des renseignements sur la cellule d'origine de l'appel, l'heure de l'appel et sa durée, le numéro appelé, etc... Le système de pré-valorisation utilise aussi des données concernant l'utilisateur contenu dans le système de valorisation (13). Ces informations concernent notamment son plan tarifaire (forfait, compte pré-payé), le coût de ses communications à la minute, etc... Une fois les données de ce ticket promotionnel établies, elles sont transmises par le système de pré-valorisation (12) au système de valorisation qui gère la facturation de l'utilisateur (ou la décrémentation de son compte prépayé, le cas échéant) en tenant compte du fait qu'il a bénéficié d'une offre tarifaire promotionnelle pour certains de ses appels. Le système de valorisation (13) est muni de routines permettant le calcul de la durée d'appel dont peut bénéficier un utilisateur possédant un compte pré-payé connaissant le montant de son crédit et la taxation remisée du fait de la promotion. Ces renseignements permettent de garantir le non-dépassement du montant pré-payé décompté du système de gestion des comptes par le système de valorisation (13).

Le système selon l'invention offre la possibilité aux opérateurs de téléphonie mobile d'adapter de façon très souple leurs offres promotionnelles en fonction du taux d'utilisation de leur réseau et des données relatives à leur clientèle. Cette souplesse est due à plusieurs facteurs.

Un premier facteur vient du fait que le système propose d'interroger le réseau cellule par cellule, ce qui permet d'avoir des offres très localisées dans l'espace.

Un second facteur vient du fait que cette interrogation est lancée à un instant précis et choisi par l'opérateur. Ceci permet d'avoir une offre localisée dans le temps.

Un troisième facteur tient au fait que les offres proposées sont personnalisées en fonction des données clients contenues dans les diverses bases de données composant le système selon l'invention. Chaque client concerné par l'offre promotionnelle recevra une offre personnalisée qui tiendra compte de son contrat (nombres d'heures de son forfait, prestations de service auquel il a souscrit, etc...) et de ses habitudes de consommation (plages horaires au cours desquelles il consomme son forfait, durée moyenne des ses communications, etc...).

Les deux premiers facteurs permettent à l'opérateur de téléphonie mobile de rentabiliser son réseau en répartissant les communications de ses clients de façon homogène dans le temps et dans l'espace. Le troisième facteur permet à l'opérateur de téléphonie mobile d'offrir à ses clients des offres personnalisées qui correspondent à leurs besoins et à leurs habitudes de consommation.

## Revendications

1. Système de construction, diffusion et application d'au moins une offre d'utilisation promotionnelle du réseau, notamment pour les réseaux de téléphonie mobile, comportant au moins une station de transmission (2) à laquelle est connecté au moins un terminal mobile (1), un service vocal interactif (10), plusieurs bases de données (11, 8a, 8b, 6) contenant des informations relatives à la clientèle ou à l'état du réseau, **caractérisé en ce qu**'un sous-système applicatif (5) actionné par le biais de l'interface de saisie d'un système applicatif (7) interroge les stations de transmission (2) constitutives d'un réseau de téléphonie mobile (4) afin de connaître le taux d'occupation du réseau (4) ainsi que le numéro IMSI de la carte SIM des terminaux mobiles (1) connectés au réseau, ces résultats sont stockés dans une base de données support (6) et comparés aux informations contenues dans les autres bases de données (11, 8a, 8b) par le système applicatif (7) qui détermine en fonction de critères les utilisateurs à sélectionner et invite alors les utilisateurs des terminaux mobiles sélectionnés à contacter le service vocal interactif (10) afin de pouvoir bénéficier d'une offre tarifaire promotionnelle personnalisée.

2. Système de construction, diffusion et application d'au moins une offre tarifaire promotionnelle selon la revendication 1, **caractérisé en ce que** le sous-système applicatif (5) interroge les stations de transmission (2) via les canaux d'interrogation distante des couches physiques du réseau ou via des sondes.

3. Système de construction, diffusion et application d'au moins une offre tarifaire promotionnelle selon la revendication 1, **caractérisé en ce que** l'interrogation des stations de transmission (2) permet de déterminer leur taux de charge immédiat ainsi que leur taux d'hébergement.

4. Système de construction, diffusion et application d'au moins une offre tarifaire promotionnelle selon la revendication 1, **caractérisé en ce que** les paramètres relatifs aux stations de transmission (2) et contenus dans le système applicatif sont représentatifs de la charge des stations, l'exclusion de certaines d'entre elles de l'offre promotionnelle, le taux de « *handover »* et le taux de « *roaming* ».

5. Système de construction, diffusion et application d'au moins une offre tarifaire promotionnelle selon la revendication 1, **caractérisé en ce que** l'invitation qui est faite à l'utilisateur de contacter le service vocal interactif s'effectue par SMS ou par push WAP.

6. Système de construction, diffusion et application d'au moins une offre tarifaire promotionnelle selon la revendication 1, **caractérisé en ce que** la base de données support (6) contient les informations issues de l'interrogation du réseau (4) effectuée par le sous-système applicatif (5) ainsi que le numéro IMSI de la carte SIM des terminaux connectés au réseau au moment de l'interrogation.

7. Système de construction, diffusion et application d'au moins une offre tarifaire promotionnelle selon la revendication 1, **caractérisé en ce que** la base de données offre (8a) contient des informations relatives aux différents types d'offres tarifaires promotionnelles existantes.

8. Système de construction, diffusion et application d'au moins une offre tarifaire promotionnelle selon la revendication 1, **caractérisé en ce que** la base de données marketing (8b) contient des informations relatives à chaque client de l'opérateur de téléphonie mobile comme par exemple le type de contrat qui lie les deux parties.

9. Système de construction, diffusion et application d'au moins une offre tarifaire promotionnelle selon la revendication 1, **caractérisé en ce que** le sous-système applicatif (5) compare les numéros IMSI des cartes SIM des terminaux (1) connectés au réseau lors de l'interrogation avec ceux contenus dans la base de données marketing (8b), seuls les numéros IMSI relevés au cours de l'interrogation et qui correspondent à ceux de clients de l'opérateur étant mis en mémoire dans la base de données support (6).

10. Système de construction, diffusion et application d'au moins une offre tarifaire promotionnelle selon la revendication 1, **caractérisé en ce que** le serveur vocal interactif (10) dispose de moyens lui permettant d'identifier le numéro d'appel de l'utilisateur afin de procéder à une comparaison entre ce numéro et ceux stockés dans la base de données promotionnelle (11).

11. Système de construction, diffusion et application d'au moins une offre tarifaire promotionnelle selon la revendication 10, **caractérisé en ce que** le serveur vocal interactif (10) est accessible via un numéro court et dispose de moyens de reconnaissance du numéro d'appel de l'utilisateur, restreignant ainsi en amont l'accès aux seuls clients de l'opérateur à l'origine de la proposition de promotion tarifaire.

12. Système de construction, diffusion et application d'au moins une offre tarifaire promotionnelle selon la revendication 11, **caractérisé en ce que** le numéro court d'accès au serveur vocal interactif (10) n'est pas tarifé (appel gratuit) permettant ainsi aux clients en prépaiement de pouvoir bénéficier de l'offre, le calcul de la durée d'appel possible en fonction de leur crédit d'une part et de la taxation remisée du fait de la promotion sur le numéro appelé d'autre part, permettant de garantir le non dépassement du montant prépayé décompté du système de gestion des comptes par le système de valorisation (13).

13. Système de construction, diffusion et application d'au moins une offre tarifaire promotionnelle selon l'une des revendications 10 à 12, **caractérisé en ce que** le serveur vocal interactif (10) diffuse un message de dissuasion dans le cas où le numéro d'appel de l'utilisateur est inconnu de la base de données promotionnelle (11).

14. Système de construction, diffusion et application d'au moins une offre tarifaire promotionnelle selon la revendication 1, **caractérisé en ce que** la base de données promotionnelle (11) est connectée à un système de pré-valorisation (12) dont la fonction est l'émission de tickets promotionnels destinés à la facturation de la communication.

15. Système de construction, diffusion et application d'au moins une offre tarifaire promotionnelle selon la revendication 14, **caractérisé en ce que** le système de pré-valorisation utilise, lors de l'émission sous forme numérique du ticket promotionnel, des informations issues de la base de données promotionnelle (11) telles que des renseignements sur la promotion dont bénéficie l'utilisateur, la cellule d'origine de l'appel, l'heure de l'appel, la durée de l'appel, le numéro appelé.

16. Système de construction, diffusion et application d'au moins une offre d'utilisation du réseau promotionnelle selon l'une des revendications 10 à 12, **caractérisé en ce que** une fois le ticket émis, le système de pré-valorisation (12) le transmet au système de valorisation (13) qui l'inclut pour la facturation de l'utilisateur.

17. Système de construction, diffusion et application d'au moins une offre tarifaire promotionnelle selon l'une des revendications précédentes, **caractérisé en ce que** chaque utilisateur du réseau de téléphonie mobile (4) reçoit une offre personnalisée qui tient compte du nombre d'heures de son forfait, des prestations de service auxquelles il a souscrit et de ses habitudes de consommation.

18. Procédé de construction, diffusion et application d'au moins une offre d'utilisation du réseau promotionnelle, notamment de téléphonie mobile, utilisable dans un système selon les revendications 1 et 8, **caractérisé en ce qu**'il comprend les étapes suivantes :
- une étape de lancement via l'interface de saisie du système applicatif (7) d'une interrogation du réseau (4) par le sous-système applicatif (5) afin de déterminer l'encombrement du réseau (4),
- une étape d'interrogation du réseau (4) par le sous-système (5),
- une étape de comparaison par le sous-système (5), des renseignements obtenus au cours de l'interrogation avec des données contenues dans le système applicatif (7) et la base de données marketing (8b),
- une étape de mémorisation par le sous-système applicatif (5) du numéro IMSI de la carte SIM des terminaux affiliés à l'opérateur et connectés aux stations de transmission sélectionnées,
- une étape de transmission par le système applicatif (7) des informations contenues dans la base de données support (6) et la base de donnée offre (8a) vers la base de données promotionnelle (11) qui est en relation avec le serveur vocal interactif (10),
- une étape d'information de l'utilisateur d'un terminal mobile (1) dont le numéro IMSI de la carte SIM est stocké dans la base de données support (6) via SMS ou push WAP,
- une étape au cours de laquelle l'utilisateur appelle un numéro court qui le met en relation avec le serveur vocal interactif (10),
- une étape d'émission par le système de pré-valorisation (12) d'un ticket promotionnel nécessaire à la facturation de la communication effectuée dans le cadre de la promotion tarifaire,
- une étape de transmission du ticket promotionnel vers le système de valorisation (13) qui gère la facturation de l'utilisateur.

19. Procédé de construction, diffusion et application d'au moins une offre tarifaire promotionnelle selon la revendication 16, **caractérisé en ce que** le serveur vocal interactif (10) émet un message dissuasif lorsqu'il est contacté par un utilisateur dont le numéro IMSI n'est pas stocké dans la base de données promotionnelle (11).

## Claims

1. A system for the construction, distribution, and application of at least one network promotional-use offer, especially for mobile-telephone networks, including at least one transmission station (2), to which at least one mobile terminal (1) is connected, an interactive voice service (10), several databases (11, 8a, 8b, 6) containing information related to clientele or the state of the network, **characterised in that** an application subsystem (5) activated by the data-capture interface of an application system (7) queries the transmission stations (2) forming a mobile telephone network (4) in order to determine the level of occupation of the network (4), as well as the IMSI number of the SIM card of the mobile terminals (1) connected to the network, these results are stored in a support database (6) and compared with information contained in the other database (11, 8a, 8b) by the application system (7), which determines, as a function of criteria, the users to be selected, and then invites the users of the selected mobile terminals to contact the interactive voice service (10), in order to be able to benefit from a personalised promotional rate offer.

2. A system for the construction, distribution, and application of at least one promotional rate offer according to Claim 1, **characterised in that** the application of subsystem (5) queries the transmission stations (2) by the remote query channels of the physical levels of the network or by probes.

3. A system for the construction, distribution, and application of at least one promotional rate offer according to Claim 1, **characterised in that** a query of the transmission stations (2) permits determination of their immediate load level, as well as their level of occupation.

4. A system for the construction, distribution, and application of at least one promotional rate offer according to Claim 1, **characterised in that** the parameters relating to the transmission stations (2) and contained in the application system represent the load of the stations, exclusion of certain of them from the promotional offer, the level of handover and the level of roaming.

5. A system for the construction, distribution, and application of at least one promotional rate offer according to Claim 1, **characterised in that** the invitation that is made to the user to contact the interactive voice service is made by SMS or by push WAP.

6. A system for the construction, distribution, and application of at least one promotional rate offer according to Claim 1, **characterised in that** the support database (6) contains information from the query of the network (4) made by the application subsystem (5), as well as the IMSI number of the SIM card of the terminals connected to the network at the time of the query.

7. A system for the construction, distribution and application of at least one promotional rate offer according to Claim 1, **characterised in that** the offer database (8a) contains information related to various types of existing promotional rate offers.

8. A system for the construction, distribution, and application of at least one promotional rate offer according to Claim 1, **characterised in that** the marketing database (8b) contains information related to each client of the mobile telephone operator, for example, the type of contract that connects the two parties.

9. A system for the construction, distribution, and application of at least one promotional rate offer according to Claim 1, **characterised in that** the application subsystem (5) compares the IMSI numbers of the SIM card of the terminals (1) connected to the network during the query with those contained in the marketing database (8b), only the IMSI numbers obtained during query, and which correspond to those of clients of the operator being stored in the support database (6).

10. A system for the construction, distribution, and application of at least one promotional rate offer according to Claim 1, **characterised in that** the interactive voice server (10) has means that enable it to identify the telephone number of the user, in order to make a comparison between this number and those stored in the promotional database (11).

11. A system for the construction, distribution, and application of at least one promotional rate offer according to Claim 10, **characterised in that** the interactive voice server (10) is accessible by a short number and has means of recognising a telephone number of the user, thus restricting upstream access only to clients of the operator at the origin of the proposal of the rate promotion.

12. A system for the construction, distribution, and application of at least one promotional rate offer according to Claim 11, **characterised in that** the short access number to the interactive voice server (10) is not charged (free call), thus permitting clients under prepaid conditions to benefit from the offer, calculation of the duration of the possible call as a function of their credit, on the one hand, and their remitted fee, because of the promotion on the called number, on the other, permitting a guarantee that the prepaid amount deducted from the account management system by the pricing system (13) is not exceeded.

13. A system for the construction, distribution, and application of at least one promotional rate offer according to one of Claims 10 through 12, **characterised in that** the interactive voice server (10) distributes a prohibition message in the case where the telephone number of the user is unknown to the promotional database (11).

14. A system for the construction, distribution, and application of at least one promotional rate offer according to Claim 1, **characterised in that** the promotional database (11) is connected to a pre-pricing system (12), whose function is to issue promotional tickets intended for invoicing the communication.

15. A system for the construction, distribution, and application of at least one promotional rate offer according to Claim 14, **characterised in that** the pre-pricing system uses, during issuing of the promotional ticket in numerical form, information from the promotional database (11), like information on the promotion, from which the user is benefiting, the cell of origin of the call, the time of the call, the duration of the call, and the called number.

16. A system for the construction, distribution, and application of at least one promotional rate offer according to one of Claims 10 through 12, **characterised in that** once the ticket is issued, the pre-pricing system (12) sends it to the pricing system (13), which includes it for invoicing the user.

17. A system for the construction, distribution, and application of at least one promotional rate offer according to one of the preceding claims, **characterised in that** each user of the mobile telephone network (4) receives a personalised offer that takes into account the number of hours of his prepayment, the services to which he has subscribed, and his consumption habits.

18. A process for the construction, distribution, and application of at least one promotional network-utilisation offer, especially a mobile-telephone network, usable in a system according to Claims 1 and 8, **characterised in that** it includes the following steps:
- a step of initiation by the data-capture interface of the application system of a query of network (4) by the application subsystem (5), in order to determine the occupation of a network (4).,
- a step of querying a network (4) by subsystem (5),
- a step of comparison by subsystem (5) of the information obtained during the query with the data contained in the application system (7) and the marketing database (8b),
- a step of the application subsystem (5) storing the IMSI number of the SIM card of the terminals affiliated with the operator and connected to selected transmission stations,
- a step of transmission by the application system (7) of information contained in the support database (6) and the offer database (8a) to the promotional database (11), which is related to the interactive voice server (10),
- a step of informing the user of a mobile terminal (1) whose IMSI number of the SIM card is stored in the support database (6), by SMS or push WAP,
- a step during which the user calls a short number that connects him to the interactive voice server (10),
- a step of the pre-pricing system (12) issuing the promotional ticket necessary for invoicing the communication made in the context of the rate promotion,
- a step of transmitting the promotional ticket to the pricing system (13) that manages invoicing of the user.

19. A method for the construction, distribution, and application of at least one promotional rate offer according to Claim 16, **characterised in that** the interactive voice server (10) issues a prohibition message when it is contacted by a user, whose IMSI number is not stored in the promotional database (1).

## Patentansprüche

1. System zur Erstellung, Verteilung und Anwendung mindestens eines Sonderangebotes zur Nutzung des Netzes, insbesondere für Mobiltelephonnetze, mindestens eine Übertragungsstation (2) umfassend, an die mindestens ein Mobilendgerät (1) angeschlossen ist, einen interaktiven Sprachdienst (10), mehrere Datenbänke (11, 8a. 8b, 6), die Informationen über die Kundschaft oder über den Zustand des Netzes enthalten, **dadurch gekennzeichnet, dass** ein Anwendungssubsystem (5), das mit Hilfe der Eingabeschnittstelle eines Anwendungssystems (7) betätigt wird, die ein Mobiltelephonnetz (4) bildenden Übertragungsstationen (2) abfragt, um die Auslastungsgrade des Netzes (4), sowie die Nummer IMSI der SIM-Karte der an das Netz angeschlossenen Mobilendgeräte (1) zu erfahren, wobei diese Ergebnisse in einer Unterstützungsdatenbank (6) gespeichert und durch das Anwendungssystem (7) mit den Informationen, die in den anderen Datenbanken (11, 8a, 8b) enthalten sind, verglichen werden, das in Abhängigkeit von Kriterien die auszuwählenden Benutzer ermittelt und dann die ausgewählten Mobiltelephonbenutzer dazu einlädt, sich an den interaktiven Sprachdienst (10) zu wenden, um einen persönlichen Sonderangebotstarif nutzen zu können.

2. System zur Erstellung, Verteilung und Anwendung mindestens eines Sondertarifangebotes nach Patentanspruch 1, **dadurch gekennzeichnet, dass** das Anwendungssubsystem (5) die übertragungsstationen (2) über Fernabfragekanäle der pysikalischen Schichten des Netzes oder über Sonden abfragt.

3. System zur Erstellung, Verteilung und Anwendung mindestens eines Sondertarifangebotes nach Patentanspruch 1, **dadurch gekennzeichnet, dass** das Abfragen der Übertragungsstationer (2) ihren derzeitigen Auslastungsgrad zu bestimmen erlaubt, sowie ihren Hosting-Grad.

4. System zur Erstellung, Verteilung und Anwendung mindestens eines Sondertarifangebotes nach Patentanspruch 1, **dadurch gekennzeichnet, dass** sich die die Übertragungsstationen (2) betreffenden und im Anwendungssystem enthaltenen Parameter auf die Auslastung der Stationen beziehen, auf den Ausschluss einiger von ihnen vom Sonderangebot, den Weiterreichungsgrad und den Roaming-Anteil.

5. System zur Erstellung, Verteilung und Anwendung mindestens eines Sondertarifangebotes nach Patentanspruch 1, **dadurch gekennzeichnet, dass** die an den Benutzer gerichtete Einladung, sich an den interaktiven Sprachdienst zu wenden, durch SMS oder Push-WAP erfolgt.

6. System zur Erstellung, Verteilung und Anwendung mindestens eines Sondertarifangebotes nach Patentanspruch 1, **dadurch gekennzeichnet, dass** die Unterstützungsdatenbank (6) die Informationen enthält, die aus der Abfrage des Netzes (4) hervorgegangen sind, die das Anwendungssubsystem (5) ausgeführt hat, sowie die Nummer IMSI der SIM-Karte der zum Zeitpunkt der Abfrage an das Netz angeschlossenen Endgerate.

7. System zur Erstellung, Verteilung und Anwendung mindestens eines Sondertarifangebotes nach Patentanspruch 1, **dadurch gekennzeichnet, dass** die Datenbank (8a) Informationen über die verschiedenen existierenden Sondertarifangebote enthält.

8. System zur Erstellung, Verteilung und Anwendung mindestens eines Sondertarifangebotes nach Patentanspruch 1, **dadurch gekennzeichnet, dass** die Marketing-Datenbank (8b) Informationen über jeden Kunden des Mobiltelephonbetreibers enthält, wie beispielsweise die Art des Vertrages, der die beiden Parteien bindet.

9. System zur Erstellung, Verteilung und Anwendung mindestens eines Sondertarifangebotes nach Patentanspruch 1, **dadurch gekennzeichnet, dass** das Anwendungssubsystem (5) die IMSI-Nummern der SIM-Karten der Endgeräte (1), die während der Abfrage ans Netz angeschlossen sind, mit denen vergleicht, die in der Marketing-Datenbank (8b) enthalten sind, wobei nur die IMSI-Nummern, die während der Abfrage ermittelt wurden und denen von Kunden des Mobiltelephonbetreibers entsprechen, in der Unterstützungsdatenbank (6) gespeichert werden.

10. System zur Erstellung, Verteilung und Anwendung mindestens eines Sondertarifangebotes nach Patentanspruch 1, **dadurch gekennzeichnet, dass** der interaktive Vokalserver (10) über Mittel verfügt, die ihm erlauben, die Anschlussnummer des Benutzers zu identifizieren, um einen Vergleich zwischen dieser Nummer und denen vorzunehmen, die in der Angebotsdatenbank (11) gespeichert sind.

11. System zur Erstellung, Verteilung und Anwendung mindestens eines Sondertarifangebotes nach Patentanspruch 10, **dadurch gekennzeichnet, dass** der interaktive Vokalserver (10) über eine Kurzwahlnummer zugänglich ist und über Mittel zur Erkennung der Nummer des Benutzers verfügt, um den Zugang aufwärts ausschließlich auf die Kunden des Mobiltelephonbetreibers zu beschränken, der den Vorschlag eines Sondertarifes macht.

12. System zur Erstellung, Verteilung und Anwendung mindestens eines Sondertarifangebotes nach Patentanspruch 11, **dadurch gekennzeichnet, dass** die Kurzwahlnummer für den Zugang zum interaktiven Vokalserver (10) nicht berechnet wird (kostenloser Anruf), wodurch den Prepaid-Kunden (Vorausbezahlungskunden) ermöglicht wird, das Angebot wahrzunehmen, wobei die Berechnung der möglichen Anrufdauer in Abhängigkeit von ihrem Kredit einerseits und der Rabattanrechnung aufgrund des Angebotes für die angerufene Nummer andererseits die Nicht-Überschreitung des vorausbezahlten Betrages zu garantieren erlauben, der vom Kontenführungssystem durch das Bewertungssystem (13) abgezogen wird.

13. System zur Erstellung, Verteilung und Anwendung mindestens eines Sondertarifangebotes nach einem der Patentansprüche 10 bis 12, **dadurch gekennzeichnet, dass** der interaktive Sprachserver (10) eine Abschreckungsmeldung ausgibt, wenn die Anschlussnummer des Benutzers der Angebotsdatenbank (11) nicht bekannt ist.

14. System zur Erstellung, Verteilung und Anwendung mindestens eines Sondertarifangebotes nach Patentanspruch 1, **dadurch gekennzeichnet, dass** die Angebotsdatenbank (11) mit einem Vorbewertungssystem (12) verbunden ist, dessen Aufgabe die Ausgabe von Angebotsscheinen ist, die der Abrechnung des Gesprächs dienen.

15. System zur Erstellung, Verteilung und Anwendung mindestens eines Sondertarifangebotes nach Patentanspruch 14, **dadurch gekennzeichnet, dass** das Vorbewertungssystem bei der Ausgabe des Angebotsscheines in digitaler Form Informationen verwendet, die aus der Angebotsdatenbank (11) stammen, wie etwa Informationen über das Angebot, das der Benutzer nutzt, die Ausgangszelle des Anrufes, den Zeitpunkt des Anrufes, die Dauer des Anrufes, die angerufene Nummer.

16. System zur Erstellung, Verteilung und Anwendung mindestens eines Sondernutzungsangebotes nach einem der Patentansprüche 10 bis 12, **dadurch gekennzeichnet, dass** das Vorbewertungssystem (12), sobald der Schein ausgegeben wurde, diesen dem Bewertungssystem (13) übergibt, das ihn für die Rechnungstellung des Benutzers einbezieht.

17. System zur Erstellung, Verteilung und Anwendung mindestens eines Sondertarifangebotes nach einem der vorangehenden Patentansprüche, **dadurch gekennzeichnet, dass** Jeder Benutzer des Mobiltelephonnetzes (4) ein persönliches Angebot empfängt, das die Stundenzahl seines Abonnements berücksichtigt, Dienstleistungen, die er abonniert hat und seine Nutzungsgewohnheiten.

18. Verfahren zur Erstellung, Verteilung und Anwendung mindestens eines Sonderangebotes zur Nutzung des Netzes, insbesondere eines Mobiltelephonnetzes, verwendbar in einem System nach den Patentansprüchen 1 und 8, **dadurch gekennzeichnet, dass** es die folgenden Schritte umfasst:
- einen Schritt des Startens einer Abfrage des Netzes (4) durch das Anwendungssubsystem (5) über die Eingabeschnittstelle des Anwendungssystems (7), um die Auslastung des Netzes (4) zu ermitteln,
- einen Schritt der Abfrage des Netzes (4) durch das Subsystem (5).
- einen Schritt des Vergleichs der im Laufe der Abfrage erhaltenen Informationen durch das Subsystem (5) mit Daten, die im Anwendungssystem (7) und der Marketingdatenbank (8b) enthalten sind,
- einen Schritt der Speicherung der IMSI-Nummer der SIM-Karte der dem Betreiber zugehörigen und an die ausgewählten Übertragungsstationen angeschlossenen Endgeräte durch das Anwendungssubsystem 5,
- einen Schritt der Sendung der in der Unterstützungsdatenbank (6) und der Angebotsdatenbank (8a) enthaltenen Informationen durch das Anwendungssystem (7) an die Angebotsdatenbank (11), die mit dem interaktiven Vokalserver (10) in Verbindung steht,
- einen Schritt der Information des Benutzers eines Mobilendgerätes (1), dessen IMSI-Nummer der SIM-Karte in der Unterstützungsdatenbank (6) gespeichert ist, durch SMS oder Push-WAP,
- einen Schritt, in dem der Benutzer eine Kurzwahlnummer anruft, die ihn mit dem interaktiven Sprachserver (10) in Verbindung bringt,
- einen Schritt der Ausgabe eines bei der Rechnungstellung des geführten Gespräches im Rahmen des Sondertarifes erforderlichen Angebotsscheines durch das Vorbewertungssystem (12),
- einen Schritt der Übertragung des Angebotsscheines zum Bewertungssystem (13), das die Rechnungstellung des Benutzers ausführt.

19. Verfahren zur Erstellung, Verteilung und Anwendung mindestens eines Sonderangebotes nach Patentanspruch 16, **dadurch gekennzeichnet, dass** der interaktive Sprachserver (10) eine Abschreckungsmeldung aussendet, wenn sich ein Benutzer an ihn wendet, dessen IMSI-Nummer nicht in der Angebotsdatenbank (11) gespeichert ist.
